# EUROPEAN PATENT SPECIFICATION

(11) **EP 2 470 426 B1**
(45) Date of publication and mention of the grant of the patent: **26.02.2014**
(21) Application number: 10751568.6
(22) Date of filing: 27.08.2010
(51) Int. Cl.: B64D 27/24, B64D 27/02, B64C 5/00

(54) **AIRCRAFT HAVING AT LEAST TWO ELECTRICAL PROPULSION GROUPS MOUNTED AT A REAR PORTION THEREOF**
FLUGZEUG MIT ZWEI AM HECK MONTIERTEN ELEKTRISCHEN ANTRIEBEN
AERONEF COMPORTANT AU MOINS DEUX GROUPES MOTOPROPULSEURS ELECTRIQUES MONTES A L'ARRIERE

(30) Priority: 28.08.2009 FR 0904097
(43) Date of publication of application: 04.07.2012
(73) Proprietor: Parzy, Benjamin, 92340 Bourg la Reine (FR)
(72) Inventor: Parzy, Benjamin, 92340 Bourg la Reine (FR)
(74) Representative: Parzy, Benjamin Alain
(86) International application number: PCT/EP2010/005272
(87) International publication number: WO 2011/023396

(56) References cited:
- EP-A- 1 736 406
- CA-A1- 2 545 442
- FR-A- 851 806
- FR-A- 875 647
- FR-A- 1 141 371
- FR-A1- 2 910 434
- US-A- 5 782 427
- US-A1- 2008 184 906

## Description

The invention concerns an electrically powered aircraft, in particular those in which the electrical engines together with the associated propeller(s) form respective propulsion groups, that can be completed by a gear box extending between the engine and the propeller. The invention applies more particularly to light aircrafts, typically weighing less than 5,700 kg.

In the following, the terms "fore", "front", "aft", "back" or "rear" are to be understood by reference to a flight displacement of the aircraft. The term "fin" designates a vertical or canted aerodynamic surface anchored directly on the fuselage of the aircraft at the rear thereof, and contributing to the lateral stability of the aircraft.

### TECHNICAL FOREGROUND OF THE INVENTION

In the domain of the reciprocating engine powered light aircrafts, several configurations have been proposed with respect to the disposal of the propulsion groups on the structure of an aircraft carrying several of said groups. Mostly, the propulsion groups are disposed on the wing, on the fore portion thereof. This is the case for aircrafts like the "Islander " of the "Britten-Norman" firm. However, this disposition is not inconvenient-free. In particular, the air stream of the propellers perturbs the air flow around the wing, and this disposition makes the wing work in torsion by causing it supporting a cantilevered mass.

FR 1141371 illustrates aircrafts having tandem wings in which the propulsion groups are carried by rear wing so that air flow generated by the propulsion groups cause the lift to increase.

Some "push-pull" configurations are known, like on the Cessna 337, in which one of the propulsion groups is located in the front of the fuselage, while the other propulsion group is located at the rear of the fuselage. These configurations totally eliminate the problem of flight asymmetry in case of failure of one of said propulsion groups. However, they raise the problem of the ground clearance of the rear propulsion group propeller in cambered configuration. Moreover, the positioning of one of said propulsion groups at the rear of the fuselage significantly impacts the CG location. The Cessna 337 is therefore equipped with a short fuselage with the propulsion groups being placed at the extremities thereof, the empennage and the fins being carried by booms extending from the wing.

There are also known aircrafts with two propulsion groups being carried on pylons at the front of the fuselage, like for instance the Dornier 28, or the MC15 CriCri designed by engineer Michel Colomban. This configuration is very interesting, as it places the masses of the propulsion groups at the front of the aircraft, the propellers being only slightly apart from each other so that a failure of one of said propulsion groups leads to a much less pronounced and more easily manageable asymmetry than when the propulsion groups are carried by the wing. This configuration however suffers from a augmented aerodynamic drag, due to the use of pylons.

There has also been proposed to position the propulsion groups one behind the other in a push-pull configuration in a common carter carried at the top of a pylon extending above the fuselage, substantially at the level of the aircraft CG. The Dornier 18 presents such a configuration. Once again, this disposition suffers from a augmented aerodynamic drag.

In certain aircrafts having a odd number of propulsion groups, there has also been proposed to locate one propulsion group on the fin. Accordingly, the Trislander of Britten-Norman company, illustrated in US3807665 and that constitutes an enlarged version of the Islander, has two propulsion groups carried by the wing, and a third propulsion group carried by the fin. This configuration was retained because it was impossible to place the third propulsion group in the nose of the aircraft. However, the disposal of a propulsion group on the fin results in the aircraft CG moving significantly backwards. This back motion was compensated by lengthening the fuselage in its portion extending forward of the wing, which resulted in some loss of lateral stability of the aircraft that was corrected by means of a dramatic augmentation of the fin surface.

There was also proposed some single engine aircraft for which the propulsion group is carried by the fin, like illustrated in EP1046577, or in GB1400034. The German firm Equator Aircraft has also proposed the single engine P420 aircraft, in which the single propulsion group is carried by the fin. More recently, it has been proposed in FR 2902079 a amphibian aircraft in which the single propulsion group is also carried by the fin, in a cantilevered fashion so as to extend forward thereof. For these two aircrafts, the fuselage extends largely forward of the wing, to compensate for the CG being moved back due to the location of the propulsion group on the fin, which results in some loss of lateral stability, which must be compensated by an important fin area.

As to light multi-engine aircrafts with a classical aerodynamic configuration, the weight of the combustion-type propulsion groups is a factor that pushes the man of the art away from placing the propulsion groups at the back of the aircraft, at least on a light aircraft. Such a configuration faces important CG location problems. However, there has been proposed to adopt an original aerodynamic configuration for which the aerodynamic centre is also very much moved back, being therefore compatible with the backing of the CG due to the propulsion groups being placed at the rear of the aircraft. One can mention the Beech Starship (US4641800) of canard configuration, the Piaggo Avanti (US4746081) with three lifting surfaces, on which the propulsion groups are carried by and aft of the wing.

If it is desired to retain a classical aerodynamic configuration, still having the propellers at the back, then the engines should be placed around the CG of the aircraft, and connected to the propellers by long transmission shafts, like illustrated in DE19840711, or in GB1239629. For aircrafts of appreciable size, the engines may be placed some more backwards, like in GB212023, FR 875647 or EP0272822, but not however at proximity of the propellers, which calls for a propeller support bearing carried by the fuselage as well as a transmission shaft between the engine and the propeller, which render the whole complex.

It is evident that what has been said hold true for light aircrafts for which the mass of the propulsion group(s) represents a significant part of the mass of the aircraft (just for note, the weight of the propulsion group of a very light aircraft like the MCR01 of Dyn'Aero is about 90 kg, for a total weight of 450 kg; that is substantially 20%). For aircraft of more important size, like the commercial aircraft built by AIRBUS or BOEING, the weight of the propulsion groups is comparatively less important (typically 10% or less), and they can by placed at the rear of the fuselage, even in a classical aerodynamic configuration, only the length of the fuselage forward the wing being a little more important than for aircraft in which the propulsion groups are placed under the wing. One knows the tri-engine Douglas DC10 on which two engines are placed under the wing, whereas the third engine is carried by the fin (see US3666211). In other configurations, all the engines are carried at the rear of the fuselage, like in the Caravelle, the Douglas DC9, or the Boeing 727. Very recently, AIRBUS has proposed in W02008081098 to install the propulsion groups on pylons or masts attached to the fuselage or to the fin so that, in the latter case, the propulsion groups extend in a cantilevered fashion on both sides of the fin. The Easyjet company has recently proposed a project called Ecojet, in which the propulsion groups are placed at the extremity of pylons forming a V at the rear extremity of the fuselage.

In the very recent domain of electrically powered light aircrafts, the situation seems somehow different. As a matter of case, it appears that the relative lightness of the electrical propulsion groups allows to envision these groups to be placed at the rear of the aircraft, without jeopardizing the CG location thereof, even if the aircraft is of classical aerodynamic configuration.

In particular, it has been recently proposed, in the context of the Solar Impulse project animated by Bertrand Picard, a classical aerodynamic configuration aircraft in which the empennage is placed at the top of the fin to form a T. The two electrical propulsion groups are carried at the extremities of the empennage. However, the disposition of the propulsion groups at the extremities of the T formed by the fin and the empennage results in some inertia being added at the extremities of a particularly flexible structure, lowering the eigen frequencies of the structural modes of that portion of the structure, that can raise some aeroelastic problems as this portion of the structure is excitated by the rotation of the propellers. This configuration calls for reinforcing the empennage. Furthermore, such a configuration imposes routing power cables until the extremities of the empennage, which adds some extra weight. Finally, such a configuration calls for a fixed empennage. These drawbacks have certainly contributed to withdraw this configuration from consideration for the final project, in which the propulsion groups have been placed in a much more classical fashion under the wing.

### OBJECT OF THE INVENTION

The invention aims at proposing an aircraft having several electrical propulsion groups, allowing for a simple installation thereof at the rear of the fuselage, giving the possibility to free the front of the aircraft while providing the wing with a non-perturbed aerodynamic flow, still keeping a simple aerodynamic configuration.

### BRIEF DESCRIPTION OF THE INVENTION

In view of that goal, it is proposed an aircraft having a fuselage carrying at least one fin at the rear thereof, and having at least two electrical propulsion groups, in which, according to the invention, said at least two electrical propulsion groups are directly carried by the fin.

« Directly » means that the propulsion groups are carried by the structure of the fin or by an extension thereof extending at the extremity, fore or aft of said fin, which locates the axis of the propeller of each propulsion group in the plane of the fin.

The so-placed propulsion groups are then at the rear of the aircraft, with no need for transmission shafts. This configuration benefits from all the inherent advantages of placing a propulsion group on the fin. The ground clearance of the propeller is guaranteed whatever the attitude of the aircraft, and the propeller is far from the part of the fuselage receiving the passengers. This configuration also benefits from all the multi-engine aircraft inherent advantages, while suppressing or lowering the asymmetry problem in case of a failure of one of said propulsion groups. Furthermore, the propulsion groups are grouped close to each other, which eases the design of the power circuit.

Also, this configuration avoids the problems caused by placing the propulsion groups on the empennage or at extremities of pylons, in particular the aeroelastic problems. Furthermore, powering of the propulsion groups is simplified and lightened as the power cables do not need rout until the extremities of the empennage.

Finally, this configuration does not call for any additional pylon which would extend cantilevered from the fuselage, the fin or the empennage, and is therefore mechanically simple and aerodynamically clean. If the aircraft is equipped with one horizontal empennage, the latter can be freed and can be movable so has to make its incidence angle variable.

According to a first embodiment, the aircraft has a unique vertical fin, and said at least two propulsion groups are carried one at the front of the fin in a tractive configuration, and the other at the rear thereof in a propulsive configuration, preferably one behind the other. In this case, the engines of the two propulsion groups are advantageously integrated into a common streamed carter.

According to a second embodiment, the aircraft has several fins, each of them carrying at least one propulsion group. This configuration is particularly interesting for a aircraft having two canted fins forming a V-tail empennage, like the Fouga Magister or certain versions of the Beechcraft Bonanza. These fins contribute both to the lateral stability and to the longitudinal stability of the aircraft. Int hat case, the extremities of the fins are less high that the extremity of a vertical fin of same efficiency, so that the propulsion groups carried by the two fins are lowered with respect to the mean line of the fuselage, which decreases the pitch down torque induced by the thrust force developed by the propulsion groups.

### BRIEF DESCRIPTION OF THE DRAWINGS

The invention will be better understood in the light of the following description of the figures of the appended drawings, among which:
- figure 1 is a side and rear view of the rear extremity of an aircraft having a single central fin, with propulsion groups disposed according to a first particular embodiment of the invention;
- figure 2 is a side and rear view of the rear extremity of an aircraft according to a variant of the invention;
- figure 3 is a side and rear view of the rear extremity of an aircraft according to another variant of the invention;
- figure 4 is a side and rear view of the rear extremity of a V-tailed aircraft, with propulsion groups disposed according to a second particular embodiment of the invention;
- figure 5 is a perspective view of an aircraft according to a variant of embodiment of figure 4;
- figures 6a,6b,6c are front, top and side views of an aircraft according to a third particular embodiment of the invention, having an inverted V-tail empennage.

### DETAILED DESCRIPTION OF THE FIGURES

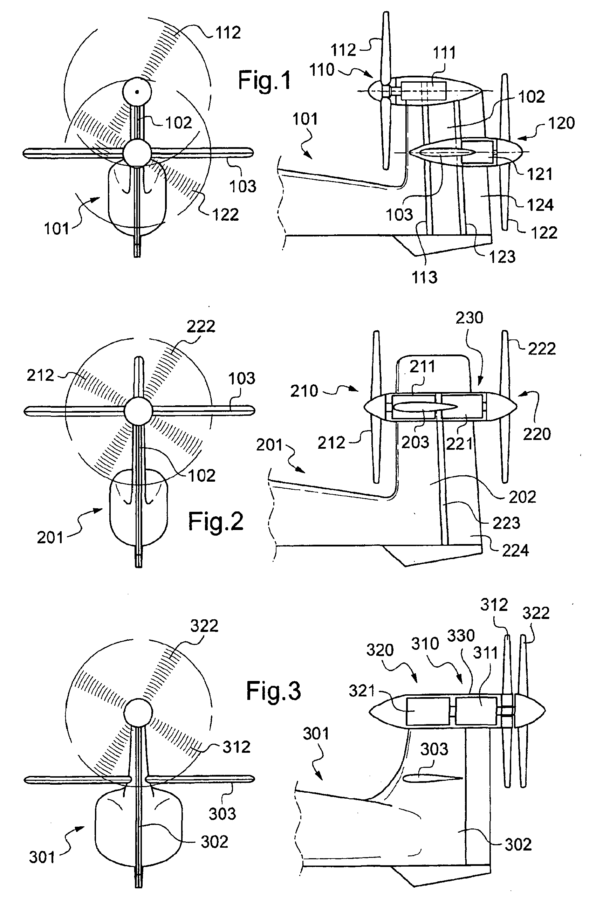

According to a first particular embodiment, the invention is applied to an aircraft having a single vertical fin at the rear of the fuselage. As illustrated in figure 1, the aircraft 101 has a single vertical fin 102 carrying an horizontal empennage 103.

The fin 102 carries at an extremity thereof a first propulsion group 110, including a first electric motor 111 directly driving a first propeller 112. Here, the first propeller 112 is turned towards the aircraft nose, and is therefore in a tractive configuration. The first propulsion group 110 is carried at an extremity of the fin, more precisely at an extremity of a main spar 113 thereof that extends accordingly for receiving the motor of said first propulsion group 110. The fin 102 also carries a second propulsion group 120, including a second electric motor 121 directly driving a second propeller 122. Here, the second propeller 122 is turned toward the aircraft back, and is therefore in a propulsive configuration. The second propulsion group 120 is here carried by a rear spar 123 of the fin (the spar on which the rudder is articulated), at the rear thereof. The propulsion assembly 110,120 is therefore of push-pull configuration, the rotations axis of the propellers extending within the plane of the fin. This configuration illustrated here is perfectly symmetrical, so that failure of one of the propulsion group does not affect the flight symmetry.

With reference to figure 2 illustrating a variant, on which the numeral references of the elements common with those of figure 1 are augmented of a hundred, the two propulsion groups 210,220 are still carried by the fin according to the invention, but are now aligned one behind the other, so that propellers 212,222 are substantially turning around a common axis of rotation. The two electric motors are protected by a common aerodynamic carter 230. The two motors are carried by the rear spar 223 of the fin.

With reference to figure 3 illustrating an other variant, on which the references of the elements common with those of figure 2 are augmented of a hundred, the two propulsion groups 310,320 are still carried by the fin 302, but are now imbricated one to the other according to the following. Motor 311 comprises a hollow shaft, whereas motor 321 comprises an elongated shaft that extends inside the hollow shaft for driving propeller 322 that extends behind propeller 312, facing each other. Therefore, the propellers are driven independently one of the other. Preferably, the rotation of the motors are chosen so that the propellers turn in opposite directions. The two motors are protected by a common aerodynamic carter 330. It is evident that the configuration can be inverted so that the propellers extend forward of the fin.

The way the motors are fixed to the structure of the fin is well known of the man of the art. In particular, damping members should be installed between each propulsion group and the fin structure so as to damp vibrations induced by the rotation of the turning masses.

According to a very interesting second particular embodiment of the invention, the invention is now applied to an aircraft having several fins, here a V-tailed aircraft having two canted fins extending obliquely each side of the rear of the fuselage for forming a V.

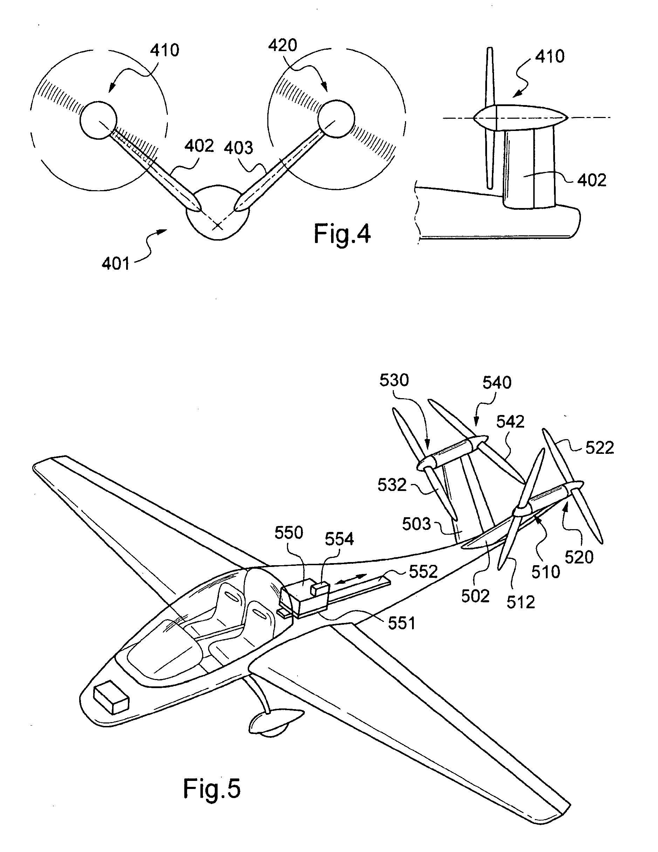

With reference to figure 4, the aircraft 401 has two fins 402,403 forming a V-tail. These fins concur both to lateral stability and longitudinal stability of the aircraft, and are sometimes referred to as a butterfly tail. Here, the fins 402, 403 respectively carry propulsion group 410 and propulsion group 420. The propellers are tractive and therefore extends forward of the fins. The reader will understand that the propulsion groups may be disposed so that the propellers are propulsive.

One can also install two propulsion groups on each of the fins, according to configurations similar to those illustrated on figures 1 to 3. There is obtained an aircraft with four propulsion groups. Multiplication of propulsion groups and their disposition according to the invention on the fins increases the safety of the aircraft, and lower the dissymmetry problems. Indeed, failure of one of the propulsion groups can be compensated by increasing the power of the other propulsion group carried by the same fin, and/or lowering the power of the two propulsion groups carried by the other fin. Furthermore, the size of the propulsion groups and the associated propellers can be reduced, which concurs to a lowered global xxx, despite an augmented number of propulsion groups.

As illustrated on figure 5, a two-seater ultralight aircraft has been powered according to the invention by four propulsion groups 510,520,530,540 carried by two V-tailed fins 502,503. This aircraft will be named Fourelec in the following.

A rough weight comparison can be made between the propulsion assemblies of the Fourelec aircraft and that of the E430 aircraft, which is a single engine, electrically powered aircraft, that has been recently proposed by YUNEEC. The E430 is powered by a single 40 kw electric motor. For the purpose of comparison, the Fourelec aircraft is equipped with four 10 kw motors, so that the overall powers of the two aircraft are identical. Numbers are based on YUNEEC data published on YUNEEC web site (see http://WWW.yuneec.co.uk/PowerMotor Tech spec.html).

| | E430 | Fourelec | Weight difference |
|---|---|---|---|
| Engine | 19 kg (40kw) | 4 x 4.5 kg (10 kw each) | - 1 kg |
| Batteries | 87 kg (100Ah) | 4 x 12,8 kg (31Ah) | - 35.8 kg |
| Power controller | 7 kg | 4 x 1.2 kg | - 2.2 kg |
| Total | 113 kg | 74 kg | - 39 kg |

If is readily clear for the man of the art that the Fourelec propulsion assembly is far lighter, even if a more important length of power cable and an additional propeller is to be accounted for.

It is likely that an electrically powered aircraft according to the invention embarks an important mass of batteries, to ensure a reasonable range. Advantageously, like illustrated in figure 5, at least a part of the batteries is located on a support 551 movable on rails 552 that are installed within the fuselage, allowing for a longitudinal motion of support 551 in the fuselage. To allow for such a motion, adapted electrical connexions between batteries and the fixed part of the electrical circuit of the aircraft will be provided for, for example one or more cables arranged as a loop, or sliding contacts. Here, the power electronics 554 allowing for power distribution towards the propulsion groups, is also mounted on the movable support 551 to be displaced with the batteries. Thus, the assembly formed by the movable support, the batteries, and the power electronics if applicable, may be removable for being replaced as a unit, which eases the operation of the aircraft.

Motion of movable support 551 allows to influence the aircraft CG location. It is therefore possible to place at least one of the passengers in the front of the aircraft, the nose of which being available because of the location of the propulsion groups at the rear of the aircraft. Variations of CG location due to variability of the passenger(s) weight may be compensated by a displacement of the mobile support 551. The invention therefore allows for an aircraft in which the forward part of the aircraft can be occupied, giving the occupants an extended view forward, still being correctly centred, without need for added centring weights making the aircraft heavier. It is made use of a heavy element that can be easily displaced, for the only liaison with the other organs are electrical liaisons.

This disposal, which is optional, may be applied to any aircraft according to the configurations illustrated at figures 1 to 4, and more generally to any electrical powered aircraft embarking substantial batteries weight likely to significantly influence the CG location of the aircraft by its motion.

According to another particular aspect of the invention, it is advantageous to use one or the other of the propellers as an air mill driving the associated motor that therefore behaves as a generator, allowing loading of the batteries of the aircraft.

However, rather than using the motor to load the batteries in flight, or additionally to this procedure, dedicated air mills driving generators may be used to load the batteries. Such an air mill may be for instance located at an extremity of the wing to be driven by tip vortices developing there around in flight.

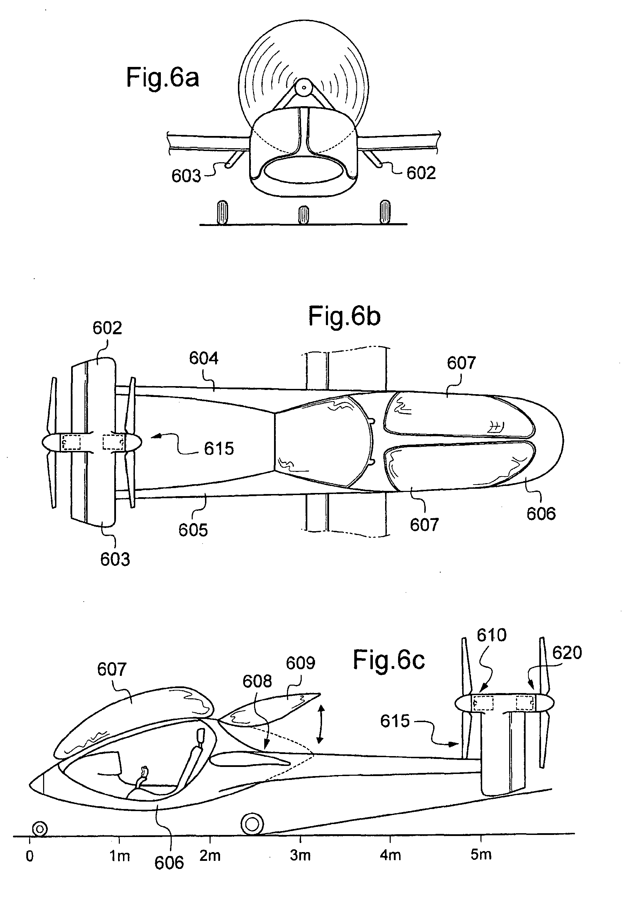

According to another embodiment of the invention illustrated at figure 6, the aircraft includes an inverted V-tail with two canted fins 602,603 joining together at an apex thereof. The inverted V-tail configuration is known for naturally inducing a correctly oriented rolling moment in response to a pedal input. That is, a left (resp. right) pedal input will induce a rolling moment making the aircraft turning left (resp. right).

According to the invention, the aircraft carries two propulsion groups 610, 620 in a push-pull configuration at the apex of the inverted V-tail fins. In the following, this aircraft configuration will be called Twinelec. The fins are carried by fuselage booms 604,605 extending aft of a fuselage nacelle 606 accommodating the passenger seats and equipped with gull wing doors 607. Alternatively, the booms may extend from the wing. The fuselage nacelle 606 is here equipped with a back boot 608 for receiving the batteries and extra payload. The boot is preferably closed by a transparent door 609 allowing rear vision for the passengers.

A rough weight comparison can be made between the propulsion assemblies of the Twinelec aircraft and that of the E430 aircraft:

| | E430 | Twinelec | Weight difference |
|---|---|---|---|
| Engine | 19 kg (40kw) | 2 x 8.2 kg (20 kw each) | - 2.6 kg |
| Batteries | 87 kg | 2 x 33.5 kg | - 20 kg |
| Power controller | 7 kg | 2 x 1.5 kg | - 4 kg |
| Total | 113 kg | 86,4 kg | - 26,6 kg |

If is readily clear for the man of the art that the Twinelec propulsion assembly is far lighter, even if a more important length of power cable and an additional propeller is to be accounted for.

Among the advantages of the Twinelec configuration are the following:
- The aircraft is perfectly symmetrical, so that failure of one of the engine has no effect on flight symmetry. As a consequence, no twin engine pilot licence should be required to pilot such an aircraft;
- A single failure of one of the engines does not lead to a complete loss of power. The Twinelec is intrinsically safer than a single engine aircraft;
- One of the engine may be unpowered in flight, to allow for a longer range;
- The unpowered engine may be used as a generator driven by the associated propeller, freely rotating in the relative wind, allowing an even more longer range;
- The two propulsions groups and their respective batteries and power controller are completely segregated and independent, so that failure in one of the power liaisons cannot influence the other power liaison;
- The motors are preferably powered by respective power cables extending inside respective booms. The cables are completely segregated;
- The propulsion group / inverted V-tail assembly 615 is preferably removably affixed to the booms via mechanical / electrical quick disconnect joints, so that this assembly may be easily stored or replaced;
- A changeover switch may be provided for allowing the batteries associated with one motor to be used for powering an other motor, for example when this motor is unpowered or when it is failed, or to be loaded by a free milling propulsion group.

The invention is not limited to what has been described in detail herein, but encompasses any variant falling within the scope of the claims. In particular, some of the advantages or optional technical features listed hereinbefore with respect to the Twinelec configuration can of course apply to other configurations according to the invention.

## Claims

1. Aircraft having a wing and a fuselage carrying at least one fin (102 ;202 ;302 ;402,403 ;502,503 ;602,603) at a rear portion thereof, the aircraft having at least two electrical propulsion groups (110,120 ;210,220 ;310,320;410,420;
510,520,530,540 ;620,630), each including at least one electric motor driving at least one propeller; wherein said at least two propulsion groups are directly carried by said at least one fin.

2. Aircraft according to claim 1, having a single vertical fin (102;202;302), in which said at least two propulsion groups are carried by said single fin in a push-pull configuration.

3. Aircraft according to claim 1, in which said at least two propulsion groups (210,220) are disposed one behind the other so that said propellers turn around a common axis of rotation.

4. Aircraft according to claim 1, in which said motors of said at least two propulsion groups (310,320) are disposed along a common axis of rotation, the motor (311) of one of said propulsion groups having a hollow shaft in which a shaft of the motor 321) of an other of said propulsion groups extend, the two shafts driving the propellers (312,322) so that they extend facing each other.

5. Aircraft according to claim 1, having several fins (402, 403 ;502,503), each of said fin carrying at least one propulsion group.

6. Aircraft according to claim 5, in which each fin (402,403) carries at least one propulsion group at an extremity thereof.

7. Aircraft according to claim 6, in which each fin carries (502,503) two propulsion groups.

8. Aircraft according to claim 6 or 7, having two canted fins forming a V-tail empennage.

9. Aircraft according to claim 1, having two canted fins (602,603) forming an inverted V-tail empennage, said propulsion groups being carried at an apex thereof.

10. Aircraft according to claim 1, in which the propulsion groups are powered by batteries (550), at least a portion of the batteries being mounted into the aircraft on a longitudinally movable support (551).

## Patentansprüche

1. Luftfahrzeug mit einer Tragfläche und einem Rumpf, der an einem hinteren Abschnitt desselben mindestens eine Flosse (102; 202; 302; 402, 403; 502, 503; 602, 603) trägt, wobei das Luftfahrzeug mindestens zwei elektrische Antriebsgruppen (110, 120; 210, 220; 310, 320; 410, 420; 510, 520, 530, 540; 620, 630) hat, die jeweils mindestens einen Elektromotor enthalten, der mindestens einen Propeller antreibt;
wobei die genannten mindestens zwei Antriebsgruppen direkt von der genannten mindestens einen Flosse getragen werden.

2. Luftfahrzeug nach Anspruch 1, mit einer einzigen vertikalen Flosse (102; 202; 302), bei dem die genannten mindestens zwei Antriebsgruppen von der genannten einzigen Flosse in einer Push-Pull-Konfiguration (Druck-Zug-Konfiguration) getragen werden.

3. Luftfahrzeug nach Anspruch 1, bei dem die genannten mindestens zwei Antriebsgruppen (210, 220) hintereinander angeordnet sind, so dass sich die genannten Propeller um eine gemeinsame Drehachse drehen.

4. Luftfahrzeug nach Anspruch 1, bei dem die genannten Motoren der genannten mindestens zwei Antriebsgruppen (310, 320) entlang einer gemeinsamen Drehachse angeordnet sind, wobei der Motor (311) einer der genannten Antriebsgruppen eine Hohlwelle hat, in der sich eine Welle des Motors (321) einer anderen der genannten Antriebsgruppen erstreckt, wobei die beiden Wellen die Propeller (312, 322) antreiben, so dass sie einander zugewandt sind.

5. Luftfahrzeug nach Anspruch 1, mit mehreren Flossen (402, 403; 502, 503), wobei jede dieser genannten Flossen mindestens eine Antriebsgruppe trägt.

6. Luftfahrzeug nach Anspruch 5, bei dem jede Flosse (402, 403) an einem Ende derselben mindestens eine Antriebsgruppe trägt.

7. Luftfahrzeug nach Anspruch 6, bei dem jede Flosse (502, 503) zwei Antriebsgruppen trägt.

8. Luftfahrzeug nach Anspruch 6 oder 7, mit zwei geneigten Flossen, die ein V-Leitwerk bilden.

9. Luftfahrzeug nach Anspruch 1, mit zwei geneigten Flossen (602, 603), die ein umgekehrtes V-Leitwerk bilden, wobei die genannten Antriebsgruppen an einem Scheitel desselben getragen werden.

10. Luftfahrzeug nach Anspruch 1, bei dem die Antriebsgruppen von Batterien (550) betrieben werden, wobei mindestens ein Teil der Batterien auf einem in Längsrichtung beweglichen Träger (551) in das Luftfahrzeug eingebaut ist.

## Revendications

1. Avion comportant une voilure et un fuselage portant à l'arrière au moins une dérive (102; 202; 302; 402, 403; 502, 503; 602, 603), l'avion comportant au moins deux groupes motopropulseurs électriques (110,120;210,220;310,320;410,420;510,520,530,540;620,630) comprenant chacun au moins un moteur électrique entraînant au moins une hélice, **caractérisé en ce que** les deux groupes motopropulseurs sont portés directement par la dérive.

2. Avion selon la revendication 1, comportant une unique dérive verticale (102 ;202 ;302), dans lequel les groupes motopropulseurs sont portés en configuration push-pull.

3. Avion selon la revendication 1, dans lequel les groupes motopropulseurs (210,220) sont disposés l'un derrière l'autre de sorte que les hélices tournent sensiblement selon un axe de rotation commun.

4. Avion selon la revendication 1, dans lequel les moteurs des groupes motopropulseurs (310,320) sont disposés selon un axe de rotation commun, le moteur de l'un des groupes motopropulseurs présentant un arbre creux dans lequel s'étend un arbre du moteur de l'autre groupe motopropulseur, les deux arbres entraînant les hélices (312,322) qui s'étendent en regard l'une de l'autre.

5. Avion selon la revendication 1, comportant plusieurs dérives (402,403 ;502, 503), chaque dérive portant au moins un groupe motopropulseur.

6. Avion selon la revendication 5, dans lequel chaque dérive (402,403) porte au moins un groupe motopropulseur à une extrémité de celle-ci.

7. Avion selon la revendication 6, dans lequel chaque dérive (502,503) porte deux groupes motopropulseurs.

8. Avion selon la revendication 6 ou la revendication 7, ayant deux dérives obliques formant un empennage en V.

9. Avion selon la revendication 1, ayant deux dérives obliques (602,603) formant un empennage en V inversé, les groupes motopropulseurs étant porté à un apex de celui-ci.

10. Avion selon la revendication 1, dans lequel les groupes motopropulseurs sont alimentés par des batteries (550), au moins une portion des batteries étant montées dans l'avion sur un support (551) déplaçable longitudinalement.
